# FASCICULE DE BREVET EUROPEEN

(11) **EP 2 956 287 B1**
(45) Date de publication et mention de la délivrance du brevet: **03.04.2019**
(21) Numéro de dépôt: 14704341.8
(22) Date de dépôt: 13.02.2014
(51) Int. Cl.: B29C 49/58, B29C 49/78

(54) **INSTALLATION DE FORMAGE DE RÉCIPIENTS PAR SOUFFLAGE COMPORTANT UN DISPOSITIF PERFECTIONNÉ DE PILOTAGE DE VANNE DE DISTRIBUTION DU FLUIDE DE SOUFFLAGE**
VORRICHTUNG ZUR HERSTELLUNG VON BEHÄLTERN MITTELS BLASFORMEN MIT EINER VERBESSERTEN VORRICHTUNG ZUM STEUERN EINES VENTILS ZUR AUSGABE DER BLASFORMUNGSFLÜSSIGKEIT
EQUIPMENT FOR FORMING CONTAINERS BY MEANS OF BLOW MOLDING COMPRISING AN IMPROVED DEVICE FOR CONTROLLING A VALVE FOR DISPENSING THE BLOW-MOLDING FLUID

(30) Priorité: 14.02.2013 FR 1351269
(43) Date de publication de la demande: 23.12.2015
(73) Titulaire: Sidel Participations, 76930 Octeville-sur-Mer (FR)
(72) Inventeur: LEMBLE, Thierry, F-76930 Octeville Sur Mer (FR); FEUILLOLEY, Guy, F-76930 Octeville Sur Mer (FR); BIANCHINI, Cédric, F-76930 Octeville Sur Mer (FR); DEAU, Thierry, F-76930 Octeville Sur Mer (FR); GENDRE, Julien, F-76930 Octeville Sur Mer (FR); LECOMTE, Frédéric, F-76930 Octeville Sur Mer (FR)
(74) Mandataire: Grassin d'Alphonse, Emmanuel Jean Marie
(86) Numéro de dépôt international: PCT/EP2014/052801
(87) Numéro de publication internationale: WO 2014/125012

(56) Documents cités:
- EP-A1- 2 255 949
- EP-A1- 2 335 904
- DE-A1- 10 231 345
- DE-A1-102004 061 230
- DE-U1-202004 018 237

## Description

L'invention concerne une installation de formage d'un récipient en matériau thermoplastique par soufflage d'une préforme au moyen d'un fluide de soufflage sous pression, l'installation comportant au moins une vanne de distribution du flux de fluide de soufflage.

Des installations apparentées sont décrites dans les documents DE202004018237U1, EP2335904A1, DE10231345A1 et EP2255949A1.

L'invention concerne plus particulièrement une installation de formage d'un récipient en matériau thermoplastique par soufflage d'une préforme au moyen d'un fluide de soufflage sous pression, l'installation comportant au moins une vanne de distribution du flux de fluide de soufflage, la vanne de distribution comportant :
- un cylindre d'axe longitudinal ;
- un piston transversal qui divise longitudinalement de manière étanche le cylindre en une première chambre de travail et une deuxième chambre de travail, et qui est monté coulissant longitudinalement dans le cylindre entre une première position de commutation dans laquelle la deuxième chambre présente un volume maximal et une deuxième position de commutation dans laquelle la deuxième chambre présente un volume minimal ;
- des premiers moyens commandés d'échappement d'un fluide contenu dans la deuxième chambre ;
- des premiers moyens commandés de mise en pression pour augmenter la pression d'un fluide de pilotage dans la première chambre de travail au-delà d'une pression d'activation permettant de déplacer le piston vers sa deuxième position de commutation.

Les installations de formage de récipients par soufflage en grande série comportent généralement une pluralité de moules qui sont alimentés successivement par des préformes en matériau thermoplastique préchauffées.

Chaque moule comporte une tuyère de soufflage qui permet d'injecter dans la préforme un fluide soufflage sous pression, généralement formé par de l'air. Le fluide de soufflage est par exemple injecté à une pression de 40 bars.

Le formage du récipient par soufflage est avantageusement accompagné d'une opération d'étirage par une tige d'étirage. La tige d'étirage permet ainsi d'étirer longitudinalement le matériau thermoplastique malléable, tandis que le soufflage permet d'étirer le matériau plastique circonférentiellement. Un tel procédé est connu sous le nom d'étirage-soufflage ou soufflage bi-orienté.

Certains procédés de formage proposent aussi de réaliser l'opération de soufflage en deux temps. Pendant un premier temps, le fluide de soufflage à est injecté dans la préforme à basse pression, par exemple à 12 bars, puis le fluide de soufflage est injecté à haute pression, par exemple à 40 bars, pour permettre de plaquer fortement le récipient contre les parois du moule.

Dans un souci d'économie d'énergie, on a récemment proposé de récupérer l'air de soufflage sous pression contenu dans le récipient en fin de formage afin de le stocker dans un réservoir. Ceci permet de réutiliser l'air sous pression résiduel.

Toutes ces opérations nécessitent d'employer un ensemble de vannes permettant de distribuer le flux de fluide de soufflage depuis les sources de fluide comprimé vers la préforme, ainsi que depuis la préforme vers le réservoir de récupération.

Jusqu'à présent, chaque vanne de distribution comporte un piston de commande qui est mobile entre :
- une première position de commutation, correspondant par exemple à l'ouverture de la vanne ;
- et une deuxième position de commutation, correspondant par exemple à la fermeture de la vanne.

Chaque vanne est associée à un dispositif de pilotage qui commande la pression d'un fluide de pilotage dans les chambres de la vanne de distribution. Le piston de la vanne de distribution est ainsi poussé vers l'une ou l'autre de ses positions de commutation par alimentation alternée des chambres de travail avec un fluide de pilotage sous pression. Le fluide de pilotage a l'avantage de présenter une pression beaucoup moins élevée que le fluide de soufflage, la pression du fluide de pilotage étant par exemple comprise entre 5 et 8 bars.

Dans le cadre d'une production de récipients en grandes séries, les installations de formage sont conçues pour produire des récipients à des cadences de plus en plus élevées. Ceci implique de pouvoir piloter de plus en plus précisément l'ouverture et la fermeture des vannes.

Or on a constaté que le temps de réponse des vannes de distribution à piston existantes présente des disparités qui s'accentuent avec l'usure.

Plus précisément, lorsque la chambre de travail est initialement à la pression atmosphérique lorsque la commutation de la vanne de distribution est commandée. La pression dans la chambre de travail se met alors à augmenter. Lorsque la pression est suffisante pour vaincre les forces de frottement appliquées au piston, alors le piston commence son coulissement vers sa deuxième position de commutation.

Il en résulte que le délai entre la commande électrique du dispositif de pilotage et le début de la course du piston est variable.

En outre, ce coulissement s'effectue plus ou moins rapidement, voire de manière saccadée, au gré des fluctuations de pression dans la chambre de travail en cours de pressurisation.

Par conséquent le délai entre le signal électrique et l'ouverture effective totale du canal d'alimentation en fluide de soufflage est la somme du délai de début de coulissement et du temps de course du piston.

Or, les forces de frottement entre le piston et son cylindre ont tendance à augmenter avec l'usure du dispositif. Ainsi, le temps de réponse de la vanne augmente avec le temps.

Cette incertitude sur le temps de réponse est susceptible de limiter la cadence de fonctionnement de l'installation de soufflage.

L'invention propose une installation de formage qui est munie d'un dispositif de soufflage dont le temps de réponse reste stable indépendamment de l'usure du dispositif.

L'invention propose ainsi une installation de formage du type décrit précédemment, caractérisée en ce que la vanne de distribution comporte des moyens de blocage qui sont commandés entre un premier état de blocage dans lequel le piston est bloqué dans sa première position de commutation et un état de libération dans lequel le coulissement du piston vers sa deuxième position de commutation est autorisé.

Selon d'autres caractéristiques de l'invention :
- la vanne de distribution comporte :
   -- des deuxièmes moyens commandés d'échappement du fluide de pilotage contenu dans la première chambre ;
   -- des deuxièmes moyens commandés pour augmenter la pression d'un fluide de pilotage dans la deuxième chambre de travail au-delà d'une pression d'activation permettant de déplacer le piston vers sa première position de commutation ;
   les moyens de blocage étant susceptibles d'être commandés dans un deuxième état de blocage dans lequel le piston est bloqué dans sa deuxième position ;
- les moyens de blocage comportent au moins un première face d'arrêt transversale rétractable qui est commandée entre :
   -- une position étendue, correspondant au premier état de blocage, dans laquelle la première face transversale d'arrêt est interposée longitudinalement sur le trajet d'une première face de butée solidaire en coulissement avec le piston pour empêcher le coulissement du piston vers sa deuxième position ;
   -- une position rétractée dans laquelle la première face d'arrêt n'est plus interposée sur le trajet de la première face de butée ;
- les moyens de blocage comportent au moins une deuxième face transversale d'arrêt rétractable qui est commandée entre :
   -- une position étendue, correspondant au deuxième état de blocage, dans laquelle la deuxième face d'arrêt est interposée longitudinalement sur le trajet d'une deuxième face transversale de butée solidaire en coulissement avec le piston pour empêcher le coulissement du piston vers sa première position ;
   -- une position rétractée dans laquelle la deuxième face d'arrêt n'est plus interposée sur le trajet de la deuxième face de butée ;
- la première face d'arrêt et la deuxième face d'arrêt sont portées par un pêne commun qui est monté mobile sur le cylindre entre une position étendue et une position rétractée ;
- les moyens de blocage comportent :
   -- au moins une première face transversale de friction qui est solidaire en coulissement avec le piston ;
   -- au moins une deuxième face transversale de friction qui est solidaire longitudinalement avec le cylindre et qui est agencée radialement en vis-à-vis avec la première face de friction ;
   -- des moyens commandés de serrage d'au moins l'une des deux faces de friction entre une position de serrage, correspondant à l'une ou l'autre des positions de blocage, dans laquelle ladite face de friction est serrée radialement contre l'autre face de friction avec une force suffisante pour empêcher le déplacement du piston l'encontre de la pression d'activation, et une position de libération, correspondant à l'état de libération, dans laquelle les deux faces de friction sont écartées radialement l'une de l'autre ;
- les moyens commandés de serrage sont formés par un organe piézoélectrique ;
- les moyens commandés de serrage sont formés par une genouillère qui est actionnée par un moteur électrique ;
- la face de friction mobile est formée par la deuxième face de friction solidaire longitudinalement du cylindre ;
- le piston comporte une queue longitudinale de commande, et en ce que les moyens de blocage sont agencés au niveau de la queue de piston ;
- le piston comporte au moins un élément ferromagnétique, et en ce que les moyens de blocage comportent des moyens électromagnétiques commandés entre le premier état de blocage dans lequel ils produisent un champ magnétique pour retenir, par attraction magnétique, le piston dans sa première position à l'encontre de la pression d'activation, et l'état de libération dans laquelle les moyens électromagnétiques sont désactivés pour permettre le coulissement du piston vers sa deuxième position ;
- les moyens électromagnétiques sont susceptibles d'être commandés dans le deuxième état de blocage dans lequel ils produisent un champ magnétique pour retenir, par attraction magnétique, le piston dans sa deuxième position à l'encontre de la pression d'activation.

L'invention concerne aussi un procédé de mise en oeuvre de l'installation pour commander le piston depuis sa première position de commutation vers sa deuxième position de commutation, caractérisé en ce qu'il comporte :
- une première étape d'armement au cours de laquelle les moyens de blocage sont commandés vers leur premier état de blocage, et au cours de laquelle les premiers moyens de mise en pression sont commandés de manière à augmenter la pression dans la première chambre au-delà de la pression d'activation ;
- une deuxième étape de détente au cours de laquelle les moyens de blocage sont commandés vers leur état de libération pour permettre le déplacement du piston vers sa deuxième position de commutation sous l'effet de la pression d'activation régnant dans la première chambre.

Selon d'autres caractéristiques du procédé :
- pour commander le piston depuis sa deuxième position de commutation vers sa première position de commutation, le procédé comporte :
   -- une première étape d'armement au cours de laquelle les moyens de blocage sont commandés vers leur deuxième état de blocage, et au cours de laquelle les deuxièmes moyens de mise en pression sont commandés de manière à augmenter la pression dans la deuxième chambre au-delà de la pression d'activation ;
   -- une deuxième étape de détente au cours de laquelle les moyens de blocage sont commandés vers leur état de libération pour permettre le déplacement du piston vers sa première position de commutation sous l'effet de la pression d'activation régnant dans la deuxième chambre ;
- la première étape d'armement est effectuée en temps masqué.

D'autres caractéristiques et avantages de l'invention apparaitront au cours de la lecture de la description détaillée qui va suivre pour la compréhension de laquelle on se reportera aux dessins annexés parmi lesquels :
- la figure 1 est une vue schématique qui représente une installation de formage de récipients en matériau thermoplastique par étirage-soufflage ;
- la figure 2 est une vue de détail qui représente une vanne de soufflage de l'installation de la figure 1 pilotée par un dispositif de pilotage ;
- la figure 3 est une vue en coupe qui représente la vanne de distribution de l'installation de la figure 1 réalisée selon un premier mode de réalisation de l'invention, le piston étant bloqué dans une première position de commutation ;
- la figure 4 est une vue similaire à celle de la figure 3 qui représente la vanne de distribution dont le piston coulisse vers une deuxième position de commutation ;
- la figure 5 est une vue en coupe qui représente la vanne de distribution de la figure 3 dans laquelle le piston est bloqué dans une deuxième position de commutation;
- la figure 6 est une vue similaire à celle de la figure 5 qui représente la vanne de distribution dont le piston coulisse vers une première position de commutation ;
- la figure 7 est une vue similaire à celle de la figure 2 qui représente la vanne de distribution réalisée selon une variante de réalisation de l'invention ;
- la figure 8 est une vue similaire à celle de la figure 7 qui représente la vanne de distribution dont le piston occupe une première position de commutation, les moyens de blocage du piston étant réalisés selon un deuxième mode de réalisation de l'invention ;
- la figure 9 est une vue similaire à celle de la figure 8 dans laquelle le piston occupe une deuxième position de commutation.

Par la suite, des éléments présentant une structure identique ou des fonctions analogues seront désignés par des mêmes numéros de référence.

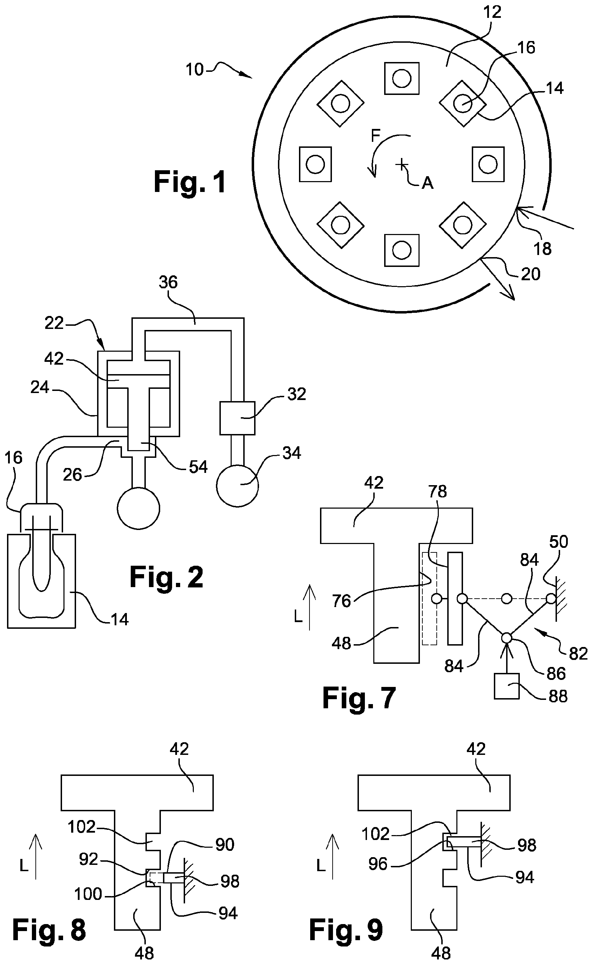

Par la suite, on adoptera de manière non limitative des orientations :
- longitudinale dirigée d'arrière en avant et indiquée par la flèche "L" des figures 2 à 5 ;
- radiale dirigée orthogonalement depuis l'axe longitudinal du piston vers l'extérieur ;
- circonférentielle dirigée orthogonalement aux directions radiale et longitudinale.

On a représenté à la figure 1, une installation 10 de formage de récipients, en particulier de bouteilles, en matière thermoplastique par soufflage ou étirage-soufflage d'une préforme préalablement chauffée.

Par matière plastique ou thermoplastique, on désigne notamment des matériaux comme le "PET" acronyme de "PolyEthylèneTerephtalate" ou encore le "PEN" pour "PolyEthylèneNaphtalate".

L'installation 10 de moulage illustrée à la figure 1 comporte un carrousel 12 qui est monté rotatif dans le sens anti-horaire autour d'un axe "A", comme cela est indiqué par la flèche "F". Des moules 14 sont agencés à la périphérie du carrousel 12. Chaque moule 14 est associé à des moyens de soufflage ou d'étirage-soufflage comportant une tuyère 16 de soufflage.

Cependant, l'invention est aussi susceptible d'être mise en oeuvre dans une machine de fabrication de type linéaire (et non rotative).

On se reportera au document FR-A-2.764.544 pour de plus amples détails d'un exemple de réalisation des moyens de soufflage ou d'étirage-soufflage.

Lors du fonctionnement, le carrousel 12 est en rotation. Chaque moule 14 passe successivement en un point 18 d'insertion au niveau duquel une préforme est insérée dans ledit moule 14. Pendant la rotation du carrousel 12, ladite préforme est ensuite formée en un récipient par les moyens d'étirage-soufflage associés audit moule 14. Le récipient final obtenu est ensuite déchargé du moule 14 associé lors de son passage à un point 20 de déchargement avant d'entamer un nouveau cycle.

Selon un procédé connu de formage du récipient, la tuyère 16 de soufflage coiffe l'ouverture (le col) de la préforme. Puis, lors d'une première étape de présoufflage, un fluide de soufflage à basse pression est injecté, par l'intermédiaire de la tuyère 16, dans la préforme pour la déformer. Le fluide de soufflage à basse pression est par exemple de l'air comprimé à 13 bars.

Le présoufflage est accompagné d'un étirage (ou élongation) de la préforme à l'aide d'une tige d'élongation (non représentée).

Le présoufflage permet notamment d'éviter que, lors de l'étirage, la matière ne se resserre sur la tige. Le contact de la matière avec la tige provoquerait un refroidissement ponctuel sur la préforme préchauffée et ne permettrait pas une mise en forme correcte du récipient.

A l'issue de l'étape de présoufflage, une deuxième étape de soufflage est enclenchée. Lors de cette deuxième étape, un fluide de soufflage à plus haute pression est injecté, par l'intermédiaire de la tuyère 16, dans la préforme pour plaquer la matière le long des parois du moule 14, permettant d'obtenir la forme finale du récipient. Le fluide de soufflage à haute pression est par exemple de l'air comprimé à 40 bars.

Lors d'une dernière étape d'échappement qui est déclenchée à l'issue de la deuxième étape de soufflage, le fluide de soufflage sous pression contenu dans le récipient est évacué par l'intermédiaire de la tuyère 16 avant que le récipient ne soit déchargé du moule 14.

La distribution des différents flux de fluide de soufflage vers ou depuis la préforme est réalisée par au moins une vanne de distribution du flux de fluide de soufflage.

Chaque poste 14, 16 de soufflage comporte ainsi les vannes de distribution suivantes :
- une première vanne de présoufflage qui permet de commander l'alimentation de la préforme en fluide de soufflage à basse pression ;
- une deuxième vanne de soufflage qui permet de commander l'alimentation de la préforme en fluide de soufflage à haute pression ;
- une troisième vanne, par exemple une vanne de récupération, qui permet de diriger le fluide de soufflage sous pression contenu dans le récipient final vers un réservoir de récupération ou vers une conduite d'échappement.

On a représenté à la figure 2 la vanne 22 de soufflage, les autres vannes fonctionnant selon le même principe. Une telle vanne 22 de distribution comporte généralement un corps 24 de vanne qui comporte une conduite 26 de passage du fluide de soufflage et des moyens 54 d'obturation de la conduite de passage. Les moyens 54 d'obturation sont commandés par un actionneur qui est lui-même piloté par un dispositif 32 de pilotage.

L'actionneur est un piston 42 qui est piloté par une source 34 de fluide de pilotage à basse pression via une conduite 36 de pilotage. Le dispositif 32 de pilotage est interposé dans la conduite 36 de pilotage.

Un exemple de réalisation d'une telle vanne est décrit plus en détail dans le document de brevet EP-A-2.335.904.

On comprendra que l'invention est aussi applicable à des vannes dites "3 voies" ou encore à d'autres types de vannes susceptibles d'être commandées par un dispositif de pilotage.

L'invention concerne plus particulièrement la vanne 22 de distribution.

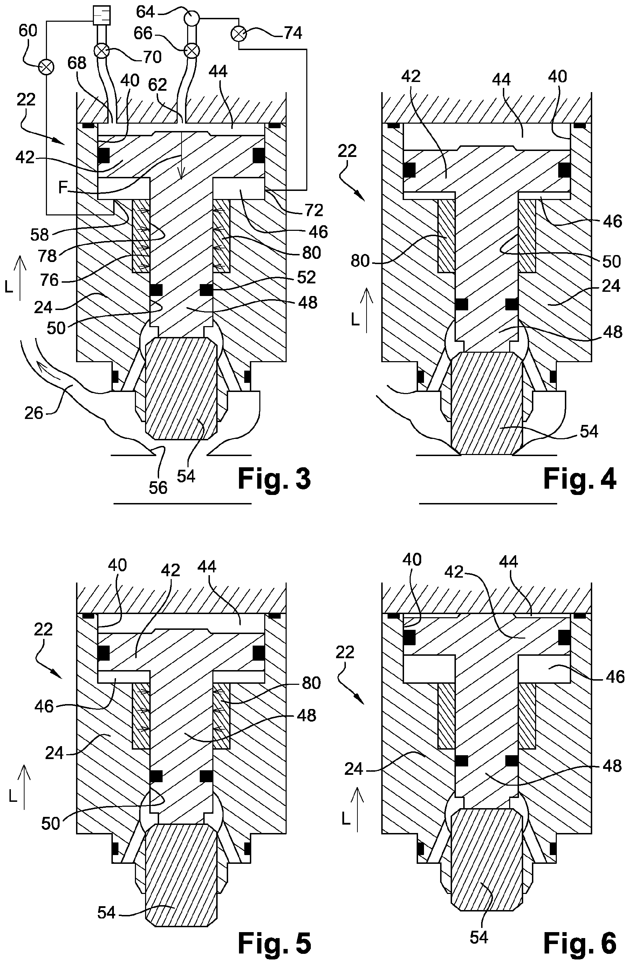

Un premier mode de réalisation d'une telle vanne de distribution est représenté à aux figures 3 à 6.

La vanne 22 de distribution permet de commander le passage du fluide de soufflage à travers la conduite 26 de passage.

Le corps 24 de la vanne 22 de distribution renferme un cylindre 40 d'axe longitudinal. Le piston 42 transversal est agencé dans le cylindre 40. Le piston 42 divise le cylindre 40 longitudinalement de manière étanche en une première chambre 44 de travail, représentée en haut à la figure 3, et une deuxième chambre 46 de travail, représentée en bas à la figure 3. Le piston 42 est monté coulissant longitudinalement dans le cylindre 40 entre :
- une première position de commutation de la vanne 22, comme illustré aux figures 3 et 6, dans laquelle la première chambre 44 de travail présente un volume minimal tandis que la deuxième chambre 46 présente un volume maximal ;
- et une deuxième position de commutation de la vanne 22, comme illustré aux figures 4 et 5, dans laquelle la première chambre 44 de travail présente un volume maximal, tandis que la deuxième chambre 46 présente un volume minimal.

Le piston 42 comporte une queue 48 qui s'étend longitudinalement vers le bas, en référence à la figure 3. La queue 48 de piston est ainsi solidaire en coulissement longitudinal avec le piston 42. La queue 48 s'étend dans un passage 50 du corps 24. Des moyens 52 d'étanchéité agencés radialement entre le passage 50 et la queue 48 permettent d'assurer l'étanchéité de la deuxième chambre 46.

La vanne 22 de distribution comporte aussi un clapet 54 mobile longitudinalement entre :
- une position de fermeture dans laquelle le clapet 54 est appliqué contre un siège 56 de la conduite 26 de passage par la queue 48 du piston 42 dans sa deuxième position de commutation de manière à interdire le passage de fluide de soufflage, comme cela est illustré aux figures 4 et 5 ;
- et une position d'ouverture dans laquelle le clapet 54 est écarté du siège 56 par la pression du fluide de soufflage lorsque la queue 48 du piston 42 occupe sa première position de commutation, comme cela est illustré aux figures 3 et 6.

Ainsi, dans la deuxième position de commutation du piston 42, le clapet 54 obture la conduite 26 de passage, tandis que dans sa première position de commutation, le fluide de soufflage peut circuler dans la conduite 26 de passage jusqu'à la tuyère 16 dans le cas d'une vanne 22 de soufflage ou de présoufflage, ou bien jusqu'à un réservoir de récupération dans le cas d'une vanne de récupération.

La vanne 22 de distribution comporte des premiers moyens commandés d'échappement du fluide de pilotage contenu dans la deuxième chambre 46. A cet effet, la deuxième chambre 46 comporte ici un orifice 58 d'échappement qui est raccordé à l'atmosphère par l'intermédiaire d'une soupape 60 d'échappement commandée électriquement.

La vanne 22 de distribution comporte aussi des premiers moyens commandés de mise en pression pour augmenter la pression d'un fluide de pilotage dans la première chambre 44 de travail au-delà d'une pression d'activation "Pa" permettant de déplacer le piston 42 vers sa deuxième position de commutation. A cet effet, la première chambre 44 comporte ici un orifice 62 d'alimentation qui est raccordé à une source 64 de fluide de pilotage sous pression par l'intermédiaire du dispositif de pilotage 32 comportant une soupape 66 d'admission commandée électriquement.

Ces premiers moyens d'échappement et ces premiers moyens de mises en pression permettent de commander le piston 42 depuis sa première position de commutation vers sa deuxième position de commutation.

La vanne 22 de distribution représentée aux figures comporte aussi des moyens pour commander le piston 42 depuis sa deuxième position de commutation vers sa première position de commutation.

Ainsi, la vanne 22 de distribution comporte des deuxièmes moyens commandés d'échappement du fluide de pilotage contenu dans la première chambre 44. A cet effet, la première chambre 44 comporte ici un orifice 68 d'échappement qui est raccordé à l'atmosphère par l'intermédiaire d'une soupape 70 d'échappement commandée électriquement.

La vanne 22 de distribution comporte aussi des deuxièmes moyens commandés de mise en pression pour augmenter la pression du fluide de pilotage dans la deuxième chambre 46 de travail au-delà d'une pression d'activation "Pa" permettant de déplacer le piston 42 vers sa première position de commutation. A cet effet, la deuxième chambre 46 comporte ici un orifice 72 d'alimentation qui est raccordé à la source 64 de fluide de pilotage sous pression par l'intermédiaire du dispositif 32 de pilotage comportant une soupape 74 d'admission commandée électriquement.

La pression d'activation "Pa" est suffisante pour permettre de vaincre les forces de résistance au déplacement du piston 42 même en cas d'usure de la vanne 22 de distribution.

La vanne 22 de distribution comporte aussi des moyens de blocage qui sont commandés entre un premier état de blocage dans lequel le piston 42 est bloqué dans sa première position de commutation, comme représenté à la figure 3, et un état de libération dans lequel le coulissement du piston 42 vers sa deuxième position de commutation est autorisé, comme représenté à la figure 4.

Les moyens de blocage sont aussi susceptibles d'être commandés dans un deuxième état de blocage dans lequel le piston 42 est bloqué dans sa deuxième position de commutation comme représenté à la figure 5.

Selon un premier mode de l'invention qui est représenté aux figures 3 à 6, les moyens de blocage permettent de bloquer le piston 42 par friction.

A cet effet, la vanne 22 de distribution comporte au moins une première face 76 transversale de friction qui est solidaire en coulissement avec le piston 42. La première face 76 est ici une face cylindrique d'axe longitudinal qui est tournée radialement vers l'extérieur et qui entoure la queue 48 du piston.

La vanne 22 de distribution comporte aussi une deuxième face 78 transversale de friction qui est solidaire longitudinalement avec le cylindre 40 et qui est agencée radialement en vis-à-vis avec la première face 76 de friction. Il s'agit ici d'une face cylindrique qui est dirigée radialement vers l'intérieur et qui est agencée dans le passage 50 de la queue 48 du piston. Cette deuxième face 78 de friction est par exemple formée de plusieurs segments qui sont mobiles radialement entre :
- une position de serrage dans laquelle ladite deuxième face 78 de friction est serrée radialement vers l'intérieur contre la première face 76 de friction avec une force suffisante pour empêcher le déplacement du piston 42 à l'encontre de la pression d'activation "Pa", comme cela est illustré aux figures 3 et 5 ;
- et une position de libération dans laquelle les deux faces 76, 78 de friction sont écartées radialement l'une de l'autre pour permettre le coulissement libre du piston 42, comme cela est illustré aux figures 4 et 6.

Ainsi, lorsque les moyens de blocage sont dans leur premier état de blocage, le piston 42 est dans sa première position de commutation et la deuxième face 78 de friction est dans sa position de serrage, bloquant ainsi le coulissement du piston 42.

Lorsque les moyens de blocage sont dans leur deuxième état de blocage, le piston 42 est dans sa deuxième position de commutation et la deuxième face 78 de friction est dans sa position de serrage, bloquant ainsi le coulissement du piston 42.

Lorsque les moyens de blocage sont dans leur état de libération, la deuxième face 78 de friction est dans sa position de libération, autorisant ainsi le coulissement du piston 42 dans les deux sens.

Avantageusement, pour permettre une friction suffisante, au moins l'une des deux faces 76, 78 de friction présente un très fort coefficient de frottement, par exemple du même type que les garnitures de friction des embrayage automobile.

Le dispositif 32 comporte aussi des moyens commandés de serrage de la deuxième face 78 de friction contre la première face 76 de friction. Les moyens commandés de serrage sont par exemple formés par un organe 80 piézoélectrique qui se dilate radialement sous l'effet de l'application d'un courant électrique déterminé. Un tel organe 80 présente avantageusement un temps de réponse très court. L'organe 80 piézoélectrique est par exemple formé d'une bague qui est interposée entre le passage 50 du corps et la deuxième face 78 de friction.

On a représenté à la figure 7 une variante de ce premier mode de réalisation. Dans cette variante, les moyens de serrage sont des moyens mécaniques. Il s'agit d'une genouillère 82 qui est formée de deux biellettes 84 jointes par une articulation 86. La genouillère 82 est interposée entre le passage 50 et la deuxième face 78 de friction. Un moteur 88 électrique est susceptible d'appliquer un effort orthogonal à la direction radial sur l'articulation 86 pour permettre l'extension de la genouillère 82, comme représenté en traits interrompus à la figure 7, commandant la deuxième face 78 de friction vers sa position de serrage.

Selon un deuxième mode de réalisation de l'invention qui est représenté aux figures 8 et 9, les moyens de blocage sont des moyens par interposition d'obstacle sur la course du piston 42.

Plus précisément, pour bloquer le piston 42 dans sa première position de pilotage, les moyens de blocage comportent au moins une première face 90 d'arrêt transversale rétractable qui est commandée entre :
- une position étendue, correspondant au premier état de blocage, comme représentée en traits interrompus à la figure 8, dans laquelle la première face 90 transversale d'arrêt est interposée longitudinalement sur le trajet d'une première face 92 de butée solidaire en coulissement avec le piston 42 pour empêcher le coulissement du piston 42 vers sa deuxième position de commutation ;
- une position rétractée, comme représenté en traits continus à la figure 8, dans laquelle la première face 90 d'arrêt n'est plus interposée sur le trajet de la première face 92 de butée.

Pour bloquer le coulissement du piston dans sa deuxième position de commutation, les moyens de blocage comportent au moins une deuxième face 94 transversale d'arrêt rétractable qui est commandée entre :
- une position étendue, correspondant au deuxième état de blocage, dans laquelle la deuxième face 94 d'arrêt est interposée longitudinalement sur le trajet d'une deuxième face 96 transversale de butée solidaire en coulissement avec le piston 42 pour empêcher le coulissement du piston 42 vers sa première position de commutation, comme représenté à la figure 9 ;
- une position rétractée dans laquelle la deuxième face 94 d'arrêt n'est plus interposée sur le trajet de la deuxième face 96 de butée.

Ainsi, lorsque les moyens de blocage sont dans leur état de libération, les deux faces 90, 94 rétractables sont simultanément dans leur position rétractée.

Dans l'exemple représenté aux figures 8 et 9, la première face 90 d'arrêt et la deuxième face 94 d'arrêt sont portées par un pêne 98 commun qui est monté mobile sur le corps 24 entre une position étendue et une position rétractée.

Les moyens de blocage sont agencés au niveau de la queue 48 de piston. Le pêne 98 est ici monté coulissant dans le corps 24 de manière à faire sailli dans le passage 50 de la queue 48 de piston en position étendue.

La queue 48 de piston comporte une première gâche 100 et une deuxième gâche 102. La première gâche 100 est agencée radialement en vis-à-vis de l'extrémité libre du pêne 98 lorsque le piston 42 occupe sa première position de commutation, tandis que la deuxième gâche 102 est agencée radialement en vis-à-vis de l'extrémité libre du pêne 98 lorsque le piston 42 occupe sa deuxième position de commutation.

La première gâche 100 porte ainsi la première face 92 de butée du piston 42, tandis que la deuxième gâche 102 porte la deuxième face 96 de butée.

Le coulissement du pêne 98 est par exemple commandé par un moteur électrique (non représenté).

En variante non représentée de l'invention, la vanne de distribution comporte :
- un premier pêne et une première encoche associée pour bloquer le piston dans sa première position de commutation ; et
- un deuxième pêne et une deuxième encoche associée pour bloquer le piston dans sa deuxième position de commutation.

Chaque pêne est alors commandé par un moteur électrique associé.

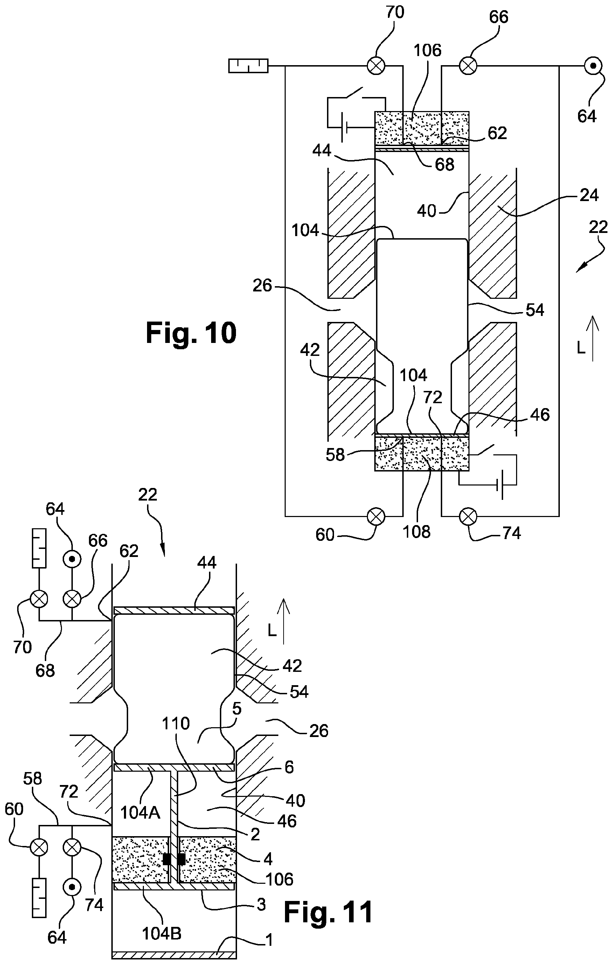

Selon un troisième mode de réalisation de l'invention qui est représenté aux figures 10 et 11, le piston 42 comporte au moins un élément ferromagnétique 104.

Dans l'exemple représenté aux figures, le piston 42 est réalisé dans un matériau ferromagnétique.

En variante, lorsque le piston est réalisé en un matériau présentant une faible susceptibilité magnétique, un élément en matériau ferromagnétique est emprisonné ou fixé dans le piston.

Les moyens de blocage comportent ici des moyens électromagnétiques commandés entre :
- le premier état de blocage dans lequel ils produisent un champ magnétique pour retenir, par attraction magnétique, le piston 42 ferromagnétique dans sa première position de commutation à l'encontre de la pression d'activation "Pa" régnant dans la première chambre 44,
- le deuxième état de blocage dans lequel ils produisent un champ magnétique pour retenir, par attraction magnétique, le piston 42 dans sa deuxième position de commutation à l'encontre de la pression d'activation "Pa" régnant dans la deuxième chambre 46 ;
- l'état de libération dans laquelle les moyens électromagnétiques sont désactivés pour permettre le coulissement du piston dans les deux directions.

Le champ magnétique est avantageusement orienté longitudinalement de manière à exercer une attraction longitudinale sur l'élément ferromagnétique 104 pour s'opposer pleinement à l'action de la pression d'activation "Pa".

Dans une première variante de réalisation illustrée à la figure 10, les moyens électromagnétiques comportent un premier électroaimant 106 qui est fixé à une première extrémité longitudinale du cylindre 40, et un deuxième électroaimant 108 qui est fixé à l'extrémité longitudinale opposée du cylindre 40.

Ainsi, dans sa première position de commutation, le piston 42 est positionné à proximité du premier électroaimant 106. Lorsque les moyens électromagnétiques sont commandés dans leur premier état de blocage, le premier électroaimant 106 est activé de manière à produire un champ magnétique suffisant pour retenir le piston 42 dans sa première position de commutation à l'encontre de la pression d'activation "Pa" régnant dans la première chambre 44. Le deuxième électroaimant 108 est alors désactivé.

Dans sa deuxième position de commutation, le piston 42 est positionné à proximité du deuxième électroaimant 108. Lorsque les moyens électromagnétiques sont commandés dans leur deuxième état de blocage, le deuxième électroaimant 108 est activé de manière à produire un champ magnétique suffisant pour retenir le piston 42 dans sa deuxième position de commutation à l'encontre de la pression d'activation "Pa" régnant dans la deuxième chambre 46. Le premier électroaimant 106 est alors désactivé.

L'état de libération correspond à la désactivation simultanée des deux électroaimants 106, 108.

Selon une deuxième variante de réalisation de ce deuxième mode de réalisation qui est illustrée à la figure 11, le piston 42 comporte deux éléments 104A, 104B ferromagnétiques qui sont formés par un premier plateau 104A transversal et par un deuxième plateau 104B transversal. Les deux plateaux 104A, 104B sont écartés longitudinalement l'un de l'autre d'une distance qui supérieure à la course du piston 42. Les deux plateaux 104A, 104B sont fixés l'un par rapport à l'autre, par exemple par une tige 110 longitudinale.

L'ensemble formé par les plateaux 104A, 104B est monté solidaire en coulissement longitudinalement avec le piston 42. Dans l'exemple représenté à la figure 11, les plateaux 104A, 104B sont agencés à l'intérieur du cylindre 40 avec le piston 42. Les plateaux 104A, 104B sont ici agencés dans la deuxième chambre 46.

Les moyens électromagnétiques sont formés par un unique électroaimant 106 qui est monté fixe par rapport au cylindre 40. L'électroaimant 106 est agencé longitudinalement entre les deux plateaux 104A, 104B de manière que :
- dans la première position de commutation du piston 42, le premier plateau 104A soit agencé à proximité de l'électroaimant 106, le deuxième plateau 104B étant alors écarté de l'électroaimant 106 ;
- dans la deuxième position de commutation du piston 42, comme représenté à la figure 11, le deuxième plateau 104B soit agencé à proximité de l'électroaimant 106, le premier plateau 104A étant alors écarté de l'électroaimant 106.

Ainsi, dans le premier état de blocage des moyens de blocage, le piston 42 occupe sa première position de commutation et l'électroaimant 106 est activé de manière à retenir le piston 42 dans sa première position de commutation par attraction du premier plateau 104A.

Dans le deuxième état de blocage des moyens de blocage, le piston 42 occupe sa deuxième position de commutation et l'électroaimant 106 est activé de manière à retenir le piston 42 dans sa deuxième position de commutation par attraction du deuxième plateau 104B.

Dans l'état de libération des moyens de blocage, l'électroaimant 106 est désactivé de manière que le piston 42 soit libre de coulisser dans les deux sens.

L'invention propose aussi un procédé de mise en oeuvre de la vanne 22 de distribution réalisée selon l'un quelconque des modes de réalisation de l'invention. Ce procédé permet notamment d'obtenir un temps de réponse très précis et très rapide de la vanne 22 de distribution. Ceci est très appréciable lorsque les cadences de production de récipient sont très élevées.

Le procédé est ici décrit en référence aux figures 3 à 6.

Pour commander le piston 42 depuis sa première position de commutation vers sa deuxième position de commutation, le procédé comporte une première étape "E1" d'armement au cours de laquelle les moyens 76, 78 de blocage sont commandés vers leur premier état de blocage. Les premiers moyens 66 de mise en pression sont commandés de manière à augmenter progressivement la pression dans la première chambre 44 au-delà de la pression d'activation "Pa". Le piston 42 se retrouve alors bloqué dans sa première position de commutation dans un état précontraint.

Puis, après cette première étape "E1" d'armement, une deuxième étape "E2" de détente est déclenchée. Au cours de cette deuxième étape "E2", les moyens 76, 78 de blocage sont commandés vers leur état de libération pour permettre le déplacement instantané du piston 42 vers sa deuxième position de commutation sous l'effet de la pression d'activation "Pa" dans la première chambre 44. Les premiers moyens 60 d'échappement ont préalablement été commandés de manière à permettre l'échappement du fluide de pilotage contenu dans la deuxième chambre 46.

La première étape "E1" est réalisée en temps masqué, c'est-à-dire pendant que la vanne 22 de distribution n'a pas besoin d'être actionnée. Par exemple, si la vanne 22 de distribution est une vanne 22 de soufflage, la première étape "E1" d'armement est réalisée juste après le début l'étape de soufflage de manière que la pression d'activation "Pa" soit atteinte avant la fin de l'étape de soufflage. A la fin de l'étape de soufflage la deuxième étape "E2" de détente permet d'obtenir un déplacement instantané du piston 42 vers sa deuxième position de commutation dans laquelle la conduite 26 de passage est obturée, avec un temps de réponse propre aux moyens de blocage 76, 78.

Le même procédé s'applique aussi pour commander le piston 42 depuis sa deuxième position de commutation vers sa première position de commutation pour permettre l'ouverture de la conduite 26 de passage.

Ainsi, lors de la première étape "E1" d'armement, les moyens 76, 78 de blocage sont commandés vers leur deuxième état de blocage, et les deuxièmes moyens 74 de mise en pression sont commandés de manière à augmenter la pression dans la deuxième chambre 46 au-delà de la pression d'activation "Pa".

Puis, lors de la deuxième étape "E2" de détente, les moyens 76, 78 de blocage sont commandés vers leur état de libération pour permettre le déplacement du piston 42 vers sa première position de commutation. Les deuxièmes moyens 70 d'échappement ont préalablement été commandés de manière à permettre l'échappement du fluide de pilotage contenu dans la première chambre 44.

La vanne 22 de distribution et son procédé de mise en oeuvre permettent ainsi de s'affranchir des temps de réponse fluctuant en fonction de l'usure du piston. Le fait d'"armer" le piston 42 avant de commander son déblocage permet d'obtenir un temps de réponse déterminé, qui ne varie quasiment pas au cours de la vie de la vanne de distribution.

Plus précisément, le début de coulissement du piston 42 est désormais maîtrisé, car il débute instantanément dés la commande des moyens de blocage dans leur état de libération.

De plus, l'énergie accumulée dans la chambre de travail 44, 46 lors de la première étape "E1" permet de garantir une vitesse de déplacement du piston 42 suffisante pour éviter les à-coup. Le coulissement du piston 42 se fait désormais d'une seule traite, ce qui raccourcit d'autant plus le délai entre la commande électrique des moyens de blocage et le changement de position de commutation de la vanne 22 de distribution.

## Revendications

1. Installation (10) de formage d'un récipient en matériau thermoplastique par soufflage d'une préforme au moyen d'un fluide de soufflage sous pression, l'installation (10) comportant au moins une vanne (22) de distribution du flux de fluide de soufflage, la vanne (22) de distribution comportant :
- un cylindre (40) d'axe longitudinal ;
- un piston (42) transversal qui divise longitudinalement de manière étanche le cylindre (40) en une première chambre (44) de travail et une deuxième chambre (46) de travail, et qui est monté coulissant longitudinalement dans le cylindre (40) entre une première position de commutation dans laquelle la deuxième chambre (46) présente un volume maximal et une deuxième position de commutation dans laquelle la deuxième chambre (46) présente un volume minimal ;
- des premiers moyens commandés d'échappement d'un fluide contenu dans la deuxième chambre (46) ;
- des premiers moyens commandés de mise en pression pour augmenter la pression d'un fluide de pilotage dans la première chambre (44) de travail au-delà d'une pression (Pa) d'activation permettant de déplacer le piston (42) vers sa deuxième position de commutation ;
**caractérisée en ce que** la vanne (22) de distribution comporte des moyens de blocage qui sont commandés entre un premier état de blocage dans lequel le piston (42) est bloqué dans sa première position de commutation et un état de libération dans lequel le coulissement du piston (42) vers sa deuxième position de commutation est autorisé.

2. Installation (10) selon la revendication précédente, **caractérisée en ce que** la vanne (22) de distribution comporte :
- des deuxièmes moyens commandés d'échappement du fluide de pilotage contenu dans la première chambre (44) ;
- des deuxièmes moyens commandés pour augmenter la pression d'un fluide de pilotage dans la deuxième chambre (46) de travail au-delà d'une pression (Pa) d'activation permettant de déplacer le piston (42) vers sa première position de commutation ;
et **en ce que** les moyens de blocage sont susceptibles d'être commandés dans un deuxième état de blocage dans lequel le piston (42) est bloqué dans sa deuxième position.

3. Installation (10) selon l'une quelconque des revendications précédentes, **caractérisée en ce que** les moyens de blocage comportent au moins un première face (90) d'arrêt transversale rétractable qui est commandée entre :
- une position étendue, correspondant au premier état de blocage, dans laquelle la première face (90) transversale d'arrêt est interposée longitudinalement sur le trajet d'une première face (92) de butée solidaire en coulissement avec le piston (42) pour empêcher le coulissement du piston (42) vers sa deuxième position ;
- une position rétractée dans laquelle la première face (90) d'arrêt n'est plus interposée sur le trajet de la première face (92) de butée.

4. Installation (10) selon l'une quelconque des revendications 2 ou 3, **caractérisée en ce que** les moyens de blocage comportent au moins une deuxième face (94) transversale d'arrêt rétractable qui est commandée entre :
- une position étendue, correspondant au deuxième état de blocage, dans laquelle la deuxième face (94) d'arrêt est interposée longitudinalement sur le trajet d'une deuxième face (96) transversale de butée solidaire en coulissement avec le piston (42) pour empêcher le coulissement du piston (42) vers sa première position ;
- une position rétractée dans laquelle la deuxième face (94) d'arrêt n'est plus interposée sur le trajet de la deuxième face (96) de butée.

5. Installation (10) selon la revendication 3 prise en combinaison avec la revendication 4, **caractérisée en ce que** la première face (90) d'arrêt et la deuxième face (94) d'arrêt sont portées par un pêne (98) commun qui est monté mobile sur le cylindre (40) entre une position étendue et une position rétractée.

6. Installation (10) selon l'une quelconque des revendications 1 ou 2, **caractérisée en ce que** les moyens de blocage comportent :
- au moins une première face (76) transversale de friction qui est solidaire en coulissement avec le piston (42) ;
- au moins une deuxième face (78) transversale de friction qui est solidaire longitudinalement avec le cylindre (40) et qui est agencée radialement en vis-à-vis avec la première face (76) de friction ;
- des moyens commandés de serrage d'au moins l'une des deux faces (78) de friction entre une position de serrage, correspondant à l'une ou l'autre des positions de blocage, dans laquelle ladite face (78) de friction est serrée radialement contre l'autre face (76) de friction avec une force suffisante pour empêcher le déplacement du piston (42) l'encontre de la pression d'activation (Pa), et une position de libération, correspondant à l'état de libération, dans laquelle les deux faces (76, 78) de friction sont écartées radialement l'une de l'autre.

7. Installation (10) selon la revendication précédente, **caractérisée en ce que** les moyens commandés de serrage sont formés par un organe (80) piézoélectrique.

8. Installation (10) selon la revendication 6, **caractérisée en ce que** les moyens commandés de serrage sont formés par une genouillère (82) qui est actionnée par un moteur (88) électrique.

9. Installation (10) selon l'une quelconque des revendications 6 à 8, **caractérisée en ce que** la face de friction mobile est formée par la deuxième face (78) de friction solidaire longitudinalement du cylindre.

10. Installation (10) selon l'une quelconque des revendications précédentes, **caractérisée en ce que** le piston (42) comporte une queue (48) longitudinale de commande, et **en ce que** les moyens de blocage sont agencés au niveau de la queue (48) de piston.

11. Installation (10) selon l'une quelconque des revendications 1 ou 2, **caractérisée en ce que** le piston (42) comporte au moins un élément (104, 104A, 104B) ferromagnétique, et **en ce que** les moyens de blocage comportent des moyens électromagnétiques (106, 108) commandés entre le premier état de blocage dans lequel ils produisent un champ magnétique pour retenir, par attraction magnétique, le piston (42) dans sa première position à l'encontre de la pression d'activation (Pa), et l'état de libération dans laquelle les moyens électromagnétiques (106, 108) sont désactivés pour permettre le coulissement du piston (42) vers sa deuxième position.

12. Installation selon la revendication précédente prise en combinaison avec la revendication 2, **caractérisée en ce que** les moyens électromagnétiques (106, 108) sont susceptibles d'être commandés dans le deuxième état de blocage dans lequel ils produisent un champ magnétique pour retenir, par attraction magnétique, le piston (42) dans sa deuxième position à l'encontre de la pression d'activation (Pa).

13. Procédé de mise en oeuvre de l'installation (10) selon l'une quelconque des revendications précédentes pour commander le piston (42) depuis sa première position de commutation vers sa deuxième position de commutation, **caractérisé en ce qu'**il comporte :
- une première étape (E1) d'armement au cours de laquelle les moyens de blocage sont commandés vers leur premier état de blocage, et au cours de laquelle les premiers moyens de mise en pression sont commandés de manière à augmenter la pression dans la première chambre (44) au-delà de la pression d'activation (Pa) ;
- une deuxième étape (E2) de détente au cours de laquelle les moyens de blocage sont commandés vers leur état de libération pour permettre le déplacement du piston (42) vers sa deuxième position de commutation sous l'effet de la pression d'activation (Pa) régnant dans la première chambre (44).

14. Procédé de mise en oeuvre de l'installation selon la revendication 13 prise en combinaison avec l'une quelconque des revendications 2 à 11 pour commander le piston (42) depuis sa deuxième position de commutation vers sa première position de commutation, **caractérisé en ce qu'**il comporte :
- une première étape (E1) d'armement au cours de laquelle les moyens de blocage sont commandés vers leur deuxième état de blocage, et au cours de laquelle les deuxièmes moyens de mise en pression sont commandés de manière à augmenter la pression dans la deuxième chambre (46) au-delà de la pression d'activation (Pa) ;
- une deuxième étape (E2) de détente au cours de laquelle les moyens de blocage sont commandés vers leur état de libération pour permettre le déplacement du piston (42) vers sa première position de commutation sous l'effet de la pression d'activation (Pa) régnant dans la deuxième chambre (46).

15. Procédé selon l'une quelconque des revendications 13 ou 14, **caractérisé en ce que** la première étape (E1) d'armement est effectuée en temps masqué.

## Patentansprüche

1. Vorrichtung (10) zur Herstellung eines Behälters aus Thermoplastmaterial mittels Blasformen aus einem Vorformling mittels eines unter Druck stehenden Blasformungsfluids, wobei die Vorrichtung (10) ein Ventil (22) zur Ausgabe des Blasformungsfluidstroms umfasst, wobei das Ausgabeventil (22) Folgendes umfasst:
- einen Längsachsenzylinder (40);
- einen Querkolben (42), der den Zylinder (40) in Längsrichtung dicht in eine erste Arbeitskammer (44) und in eine zweite Arbeitskammer (46) unterteilt und der im Zylinder (40) zwischen einer ersten Schaltposition, in der die zweite Kammer (46) ein maximales Volumen aufweist, und einer zweiten Schaltposition, in der die zweite Kammer (46) ein minimales Volumen aufweist, in Längsrichtung gleitend montiert ist;
- erste gesteuerte Mittel zum Ausströmen eines in der zweiten Kammer (46) enthaltenen Fluids;
- erste gesteuerte Druckbeaufschlagungsmittel zum Erhöhen des Drucks eines Steuerfluids in der ersten Arbeitskammer (44) auf oberhalb eines Einschaltdrucks (Pa), wodurch ermöglicht wird, den Kolben (42) in Richtung seiner zweiten Schaltposition zu bewegen;
**dadurch gekennzeichnet, dass** das Ausgabeventil (22) Blockiermittel umfasst, die zwischen einem ersten Blockierzustand, in dem der Kolben (42) in seiner ersten Schaltposition blockiert ist, und einem Freigabezustand, in dem das Gleiten des Kolbens (42) in Richtung seiner zweiten Schaltposition erlaubt ist, gesteuert werden.

2. Vorrichtung (10) nach dem vorhergehenden Anspruch, **dadurch gekennzeichnet, dass** das Ausgabeventil (22) Folgendes umfasst:
- zweite gesteuerte Mittel zum Ausströmen des in der ersten Kammer (44) enthaltenen Steuerfluids;
- zweite gesteuerte Mittel zum Erhöhen des Drucks eines Steuerfluids in der zweiten Arbeitskammer (46) auf oberhalb eines Einschaltdrucks (Pa), wodurch ermöglicht wird, den Kolben (42) in Richtung seiner ersten Schaltposition zu bewegen;
und dadurch, dass die Blockiermittel in der Lage sind, in einen zweiten Blockierzustand gesteuert zu werden, in dem der Kolben (42) in seiner zweiten Schaltposition blockiert ist.

3. Vorrichtung (10) nach einem der vorhergehenden Ansprüche, **dadurch gekennzeichnet, dass** die Blockiermittel mindestens eine erste einziehbare, quer ausgerichtete Stoppfläche (90) umfassen, die gesteuert wird zwischen:
- einer ausgefahrenen Position, die dem ersten Blockierzustand entspricht, in der die erste quer ausgerichtete Stoppfläche (90) in Längsrichtung auf dem Weg einer ersten Anschlagsfläche (92) angeordnet ist, die mit dem Kolben (42) fest verbunden gleitet, um das Gleiten des Kolbens (42) in Richtung seiner zweiten Position zu verhindern;
- einer eingezogenen Position, in der die erste Stoppfläche (90) nicht mehr auf dem Weg der ersten Anschlagsfläche (92) liegt.

4. Vorrichtung (10) nach einem der Ansprüche 2 oder 3, **dadurch gekennzeichnet, dass** die Blockiermittel mindestens eine zweite einziehbare, quer ausgerichtete Stoppfläche (94) umfassen, die gesteuert wird zwischen:
- einer ausgefahrenen Position, die dem zweiten Blockierzustand entspricht, in der die zweite Stoppfläche (94) in Längsrichtung auf dem Weg einer zweiten quer ausgerichteten Anschlagsfläche (96) angeordnet ist, die mit dem Kolben (42) fest verbunden gleitet, um das Gleiten des Kolbens (42) in Richtung seiner ersten Position zu verhindern;
- einer eingezogenen Position, in der die zweite Stoppfläche (94) nicht mehr auf dem Weg der zweiten Anschlagsfläche (96) liegt.

5. Vorrichtung (10) nach Anspruch 3 in Kombination mit Anspruch 4, **dadurch gekennzeichnet, dass** die erste Stoppfläche (90) und die zweite Stoppfläche (94) durch einen gemeinsamen Riegel (98) getragen sind, der zwischen einer ausgefahrenen Position und einer eingezogenen Position beweglich auf dem Zylinder (40) montiert ist.

6. Vorrichtung (10) nach einem der Ansprüche 1 oder 2, **dadurch gekennzeichnet, dass** die Blockiermittel Folgendes umfassen:
- mindestens eine erste quer ausgerichtete Reibfläche (76), die mit dem Kolben (42) fest verbunden gleitet;
- mindestens eine zweite quer ausgerichtete Reibfläche (78), die in Längsrichtung mit dem Zylinder (40) fest verbunden ist und die radial gegenüber der ersten Reibfläche (76) eingerichtet ist;
- gesteuerte Spannmittel zum Spannen mindestens einer der zwei Reibflächen (78) zwischen einer Spannposition, die einer der beiden Blockierpositionen entspricht, in der die Reibfläche (78) mit ausreichend Kraft, um gegen den Anschaltdruck (Pa) die Bewegung des Kolbens (42) zu verhindern, radial gegen die andere Reibfläche (76) gespannt wird, und einer Freigabeposition, die dem Freigabezustand entspricht, in der die zwei Reibflächen (76, 78) radial voneinander beabstandet sind.

7. Vorrichtung (10) nach dem vorhergehenden Anspruch, **dadurch gekennzeichnet, dass** die gesteuerten Spannmittel durch ein piezoelektrisches Element (80) gebildet sind.

8. Vorrichtung (10) nach Anspruch 6, **dadurch gekennzeichnet, dass** die gesteuerten Spannmittel durch einen Kniehebel (82) gebildet sind, der durch einen Elektromotor (88) betätigt wird.

9. Vorrichtung (10) nach einem der Ansprüche 6 bis 8, **dadurch gekennzeichnet, dass** die bewegliche Reibfläche durch die zweite in Längsrichtung mit dem Zylinder fest verbundene Reibfläche (78) gebildet ist.

10. Vorrichtung (10) nach einem der vorhergehenden Ansprüche, **dadurch gekennzeichnet, dass** der Kolben (42) ein längs ausgerichtetes Steuerendstück (48) umfasst und dadurch, dass die Blockiermittel auf Höhe des Kolbenendstücks (48) eingerichtet sind.

11. Vorrichtung (10) nach einem der Ansprüche 1 oder 2, **dadurch gekennzeichnet, dass** der Kolben (42) mindestens ein ferromagnetisches Element (104, 104A, 104B) umfasst und dadurch, dass die Blockiermittel elektromagnetische Mittel (106, 108) umfassen, die zwischen dem ersten Blockierzustand, in dem sie ein Magnetfeld erzeugen, um durch magnetische Anziehungskraft den Kolben (42) gegen den Anschaltdruck (Pa) in seiner ersten Position zurückzuhalten, und dem Freigabezustand, in dem die elektromagnetischen Mittel (106, 108) abgeschaltet sind, um das Gleiten des Kolbens (42) in Richtung seiner zweiten Position zu ermöglichen, gesteuert werden.

12. Vorrichtung nach dem vorhergehenden Anspruch in Kombination mit Anspruch 2, **dadurch gekennzeichnet, dass** die elektromagnetischen Mittel (106, 108) in der Lage sind, in den zweiten Blockierzustand gesteuert zu werden, in dem sie ein Magnetfeld erzeugen, um durch magnetische Anziehungskraft den Kolben (42) gegen den Anschaltdruck (Pa) in seiner zweiten Position zurückzuhalten.

13. Verfahren zum Verwenden der Vorrichtung (10) nach einem der vorhergehenden Ansprüche, um den Kolben (42) aus seiner ersten Schaltposition in Richtung seiner zweiten Schaltposition zu steuern, **dadurch gekennzeichnet, dass** es Folgendes umfasst:
- einen ersten Schritt (E1) des Rüstens, in dessen Zuge die Blockiermittel in Richtung ihres ersten Blockierzustands gesteuert werden und in dessen Zuge die ersten Druckbeaufschlagungsmittel derart gesteuert werden, dass sie den Druck in der ersten Kammer (44) auf oberhalb des Einschaltdrucks (Pa) erhöhen;
- einen zweiten Schritt (E2) der Entspannung, in dessen Zuge die Blockiermittel in Richtung ihres Freigabezustands gesteuert werden, um die Bewegung des Kolbens (42) in Richtung seiner zweiten Schaltposition durch Wirkung des Anschaltdrucks (Pa), der in der ersten Kammer (44) herrscht, zu ermöglichen.

14. Verfahren zum Verwenden der Vorrichtung nach Anspruch 13 im Kombination mit einem der Ansprüche 2 bis 11, um den Kolben (42) aus seiner zweiten Schaltposition in Richtung seiner ersten Schaltposition zu steuern, **dadurch gekennzeichnet, dass** es Folgendes umfasst:
- einen ersten Schritt (E1) des Rüstens, in dessen Zuge die Blockiermittel in Richtung ihres zweiten Blockierzustands gesteuert werden und in dessen Zuge die zweiten Druckbeaufschlagungsmittel derart gesteuert werden, dass sie den Druck in der zweiten Kammer (46) auf oberhalb des Einschaltdrucks (Pa) erhöhen;
- einen zweiten Schritt (E2) der Entspannung, in dessen Zuge die Blockiermittel in Richtung ihres Freigabezustands gesteuert werden, um die Bewegung des Kolbens (42) in Richtung seiner ersten Schaltposition durch Wirkung des Anschaltdrucks (Pa), der in der zweiten Kammer (46) herrscht, zu ermöglichen.

15. Verfahren nach einem der Ansprüche 13 oder 14, **dadurch gekennzeichnet, dass** der erste Schritt (E1) des Rüstens hauptzeitparallel ausgeführt wird.

## Claims

1. Installation (10) for forming a container made from thermoplastics material by blow-moulding a preform using a pressurized blow-moulding fluid, the installation (10) comprising at least one delivery valve (22) for dispensing the flow of blow-moulding fluid, the delivery valve (22) comprising:
- a cylinder (40) with longitudinal axis;
- a transverse piston (42) which divides the cylinder (40) longitudinally in a sealed manner into a first working chamber (44) and a second working chamber (46), and which is mounted with the ability to slide longitudinally in the cylinder (40) between a first switching position in which the second chamber (46) has a maximum volume and a second switching position in which the second chamber (46) has a minimum volume;
- first commanded means for exhausting a fluid contained in the second chamber (46);
- first commanded pressurizing means for increasing the pressure of a control fluid in the first working chamber (44) beyond an activation pressure (Pa) allowing the piston (42) to be moved towards its second switching position;
**characterized in that** the delivery valve (22) comprises blocking means which are commanded between a first blocking state in which the piston (42) is blocked in its first switching position and a freed state in which the sliding of the piston (42) towards its second switching position is permitted.

2. Installation (10) according to the preceding claim, **characterized in that** the delivery valve (22) comprises:
- second commanded means for exhausting the control fluid contained in the first chamber (44);
- second commanded means for increasing the pressure of a control fluid in the second working chamber (46) beyond an activation pressure (Pa) allowing the piston (42) to be moved towards its first switching position;
and **in that** the blocking means are able to be commanded into a second blocking state in which the piston (42) is blocked in its second position.

3. Installation (10) according to either one of the preceding claims, **characterized in that** the blocking means comprise at least a first retractable transverse stopping face (90) which is commanded between:
- an extended position, corresponding to the first blocking state, in which position the first transverse stopping face (90) is interposed longitudinally in the path of a first stop face (92) sliding as one with the piston (42) to prevent the piston (42) from sliding towards its second position;
- a retracted position in which the first stopping face (90) is no longer interposed in the path of the first stop face (92).

4. Installation (10) according to either one of Claims 2 and 3, **characterized in that** the blocking means comprise at least a second retractable transverse stopping face (94) which is commanded between:
- an extended position, corresponding to the second blocking state, in which position the second stopping face (94) is interposed longitudinally in the path of a second transverse stop face (96) sliding as one with the piston (42) to prevent the piston (42) from sliding towards its first position;
- a retracted position in which the second stopping face (94) is no longer interposed in the path of the second stop face (96).

5. Installation (10) according to Claim 3 considered in combination with Claim 4, **characterized in that** the first stopping face (90) and the second stopping face (94) are borne by a common lock bolt (98) which is mounted on the cylinder (40) such that it is mobile between an extended position and a retracted position.

6. Installation (10) according to either one of Claims 1 and 2, **characterized in that** the blocking means comprise:
- at least one first transverse friction face (76) which slides as one with the piston (42);
- at least one second transverse friction face (78) which is secured longitudinally to the cylinder (40) and which is positioned radially facing the first friction face (76);
- commanded means for clamping at least one of the two friction faces (78) between a clamping position, corresponding to one or the other of the blocking positions, in which position the said friction face (78) is clamped radially against the other friction face (76) with sufficient force to prevent the piston (42) from moving against the action of the activation pressure (Pa), and a freed position, corresponding to the freed state, in which the two friction faces (76, 78) are radially separated from one another.

7. Installation (10) according to the preceding claim, **characterized in that** the commanded clamping means are formed by a piezoelectric member (80).

8. Installation (10) according to Claim 6, **characterized in that** the commanded clamping means are formed by a toggle lever (82) which is actuated by an electric motor (88).

9. Installation (10) according to any one of Claims 6 to 8, **characterized in that** the mobile friction face is formed by the second friction face (78) longitudinally secured to the cylinder.

10. Installation (10) according to any one of the preceding claims, **characterized in that** the piston (42) comprises a longitudinal operating stem (48) and **in that** the blocking means are arranged at the piston stem (48) .

11. Installation (10) according to either one of Claims 1 and 2, **characterized in that** the piston (42) comprises at least one ferromagnetic element (104, 104A, 104B), and **in that** the blocking means comprise electromagnetic means (106, 108) commanded between the first blocking state in which they produce a magnetic field in order, through magnetic attraction, to hold the piston (42) in its first position against the action of the activation pressure (Pa), and the freed state in which the electromagnetic means (106, 108) are deactivated to allow the piston (42) to slide towards its second position.

12. Installation according to the preceding claim considered in combination with Claim 2, **characterized in that** the electromagnetic means (106, 108) are able to be commanded into the second blocking state in which they produce a magnetic field in order, through magnetic attraction, to hold the piston (42) in its second position against the action of the activation pressure (Pa).

13. Method for operating the installation (10) according to any one of the preceding claims for commanding the piston (42) from its first switching position towards its second switching position, **characterized in that** it comprises:
- an arming first step (E1) during which the blocking means are commanded towards their first blocking state and during which the first pressurizing means are commanded in such a way as to increase the pressure in the first chamber (44) beyond the activation pressure (Pa);
- a triggering second step (E2) during which the blocking means are commanded towards their freed state to allow the piston (42) to move towards its second switching position under the effect of the activation pressure (Pa) prevailing in the first chamber (44).

14. Method for operating the installation according to Claim 13 considered in combination with any one of Claims 2 to 11 for commanding the piston (42) from its second switching position towards its first switching position, **characterized in that** it comprises:
- an arming first step (E1) during which the blocking means are commanded towards their second blocking state and during which the second pressurizing means are commanded in such a way as to increase the pressure in the second chamber (46) beyond the activation pressure (Pa);
- a triggering second step (E2) during which the blocking means are commanded towards their freed state so as to allow the piston (42) to move towards its first switching position under the effect of the activation pressure (Pa) prevailing in the second chamber (46).

15. Method according to either one of Claims 13 and 14, **characterized in that** the arming first step (E1) is performed as a concurrent operation.
